# EUROPÄISCHE PATENTSCHRIFT

(11) **EP 0 406 218 B1**
(45) Veröffentlichungstag und Bekanntmachung des Hinweises auf die Patenterteilung: **02.04.1997**
(21) Anmeldenummer: 90890188.7
(22) Anmeldetag: 21.06.1990
(51) Int. Cl.: C01B 13/10, C01B 13/02, D21C 9/153

(54) **Vefahren zur Herstellung von Ozon**
Process for preparing ozone
Procédé de préparation d'ozone

(30) Priorität: 26.06.1989 AT 1560/89
(43) Veröffentlichungstag der Anmeldung: 02.01.1991
(73) Patentinhaber: VOEST-ALPINE INDUSTRIAL SERVICES GmbH, A-4020 Linz (AT)
(72) Erfinder: Lehner, Franz J., Dipl.-Ing., A-4061 Pasching (AT); Wawrina, Rainer, A-4060 Leonding (AT)
(74) Vertreter: Haffner, Thomas M., Dr.

(56) Entgegenhaltungen:
- EP-A- 0 262 449
- EP-A- 0 297 090

## Beschreibung

Die Erfindung bezieht sich auf ein Verfahren zur Herstellung von Ozon für einen Ozonverbraucher.

Im Zusammenhang mit Zellstoffbleichen, welche beispielsweise als Ozonverbraucher in Betracht kommen, wurde bereits vorgeschlagen, den aus der Zellstoffbleiche abgezogenen Sauerstoff zu reinigen und neuerlich über einen Ozonisator zu leiten, worauf Ozon der Bleiche zugeführt werden kann. Derartige Kreislaufführungen des Sauerstoffes sind insbesondere dann von Bedeutung, wenn Ozon aus angereichertem Sauerstoff, insbesondere aus mehr als 90 % Sauerstoff bestehenden Gasen hergestellt wird, da bei erhöhter Sauerstoffkonzentration die Ozonausbeute im Ozonisator wesentlich günstiger liegt als bei Einsatz von Luft. Die Kreislaufführung erlaubt es dabei, den Anreicherungsgrad des Sauerstoffs im gasförmigen Medium im wesentlichen aufrechtzuerhalten, wobei allerdings Sauerstoff je nach Natur des Ozonverbrauchers in mehr oder minder großem Ausmaß verbraucht wird. Insbesondere wenn große Mengen an organischen Substanzen oxidiert werden sollen, aber auch bei der Zellstoffbleiche, werden erhebliche Mengen an Sauerstoff in der Zeiteinheit verbraucht und es wurde beispielsweise in der EP-A1 297 090 bereits vorgeschlagen, die Reinigung in einer Druckwechsel-Adsorptionsanlage zur Entfernung von Verunreinigungen aus dem Sauerstoffstrom vorzunehmen und die gegebenenfalls erforderliche Zusatzmenge mit dieser für die Reinigung herangezogenen Druckwechsel-Adsorptionsanlage aus Luft anzureichern. Eine derartige Anordnung erfordert aber eine sehr große Dimensionierung der Druckwechsel-Adsorptionsanlage, da beispielsweise für den Ersatz einer Sauerstoffmenge im Ausmaß von 10 % bei Verwendung der gleichen Druckwechsel-Adsorptionsanlage wie sie für die Reinigung des im Kreislauf geführten Gases eingesetzt wird, eine um Zehnerpotenzen höhere Luftmenge durch die Druckwechsel-Adsorptionsanlage durchgesetzt werden muß, um den gewünschten Sauerstoffbedarf ersetzen zu können. Bei der benötigten Zusatzluftmenge, welche in der Druckwechsel-Adsorptionsanlage zur Gewinnung von technischem Sauerstoff gereinigt werden soll, muß nämlich nicht nur der Umstand berücksichtigt werden, daß Sauerstoff in Luft wesentlich geringer angereichert ist als im technischen Sauerstoff, sondern auch dem Umstand Rechnung getragen werden, daß der Wirkungsgrad einer derartigen Druckwechsel-Adsorptionsanlage im günstigsten Fall 50 % erreicht, wenn Luft als Einsatzstoff Verwendung findet, um technischen Sauerstoff zu gewinnen. Für die bisher bekannten Verfahren, bei welchen der im Kreislauf geführte Restsauerstoff in einer Druckwechsel-Adsorptionsanlage gereinigt wird und über die gleiche Druckwechsel-Adsorptionsanlage die geforderte Sauerstoffmenge aus Luft ergänzt wurde, waren somit überaus große Druckwechsel-Adsorptionsanlagen erforderlich, wodurch bei gleichzeitiger Berücksichtigung des beim Desorbieren abgezogenen Volumens erhebliche Verluste an Reinsauerstoff in Kauf genommen werden mußten.

Die Erfindung zielt nun darauf ab, ein Verfahren der eingangs genannten Art zu schaffen, bei welchem mit möglichst geringer Anlagengröße ein höheres Maß an Wirtschaftlichkeit erreicht wird, und die Verluste an bereits angereichertem Sauerstoff so gering wie nur möglich gehalten werden können. Die Lösung dieser Aufgabe besteht in dem erfindungsgemäßen Verfahren zur Herstellung von Ozon für einen Ozonverbraucher, aus welchem Restsauerstoff abgezogen und in einer Druckwechsel-Adsorptionsanlage gereinigt wird und zumindest teilweise unter Zwischenschaltung eines Ozonisators dem Ozonverbraucher rückgeführt wird, wobei die über die rückführbare Sauerstoffmenge hinausgehende Zusatzmenge für den Bedarf des Verbrauchers einer von der Druckwechsel-Adsorptionsanlage zum Reinigen des rezirkulierten Sauerstoffes gesonderten Sauerstoffquelle entnommen wird, und die über die rückführbare Sauerstoffmenge hinausgehende Zusatzmenge bei kleineren Verbrauchsmengen aus Flaschen oder Flüssigtanks entnommen wird und bei größeren Bedarfsmengen aber in einer gesonderten Druckwechsel-Adsorptionsanlage zur Sauerstofferzeugung aus Luft erzeugt wird und dem rückgeführten Sauerstoff vor dem Ozonerzeuger zugemischt wird, wobei die aus der Druckwechsel-Adsorptionsanlage bei der Regeneration desorbierte Gasmenge zumindest teilweise in den aus dem Verbraucher abgezogenen Gasstrom eingespeist und über die Druckwechsel-Adsorptionsanlage im Kreislauf geführt wird und die dem Ozonisator zugeführte, aus der Druckwechsel-Adsorptionsanlage abgezogene Sauerstoffmenge über eine Oxidationsstufe zur Zerstörung niedriger Kohlenwasserstoffe dem Ozonisator zugeführt wird, wobei eine Teilmenge des im Ozonisator erzeugten Ozons der Oxidationsstufe rückgeführt wird. Dadurch, daß neben der für die Reinigung des im Kreislauf geführten, mit Sauerstoff angereicherten Gases eingesetzten Druckwechsel-Adsorptionsanlage eine gesonderte Sauerstoffquelle vorgesehen ist, welcher die geforderte Zusatzmenge an Sauerstoff entnommen wird, kann die für die Reinigung eingesetzte Druckwechsel-Adsorptionsanlage wesentlich kleiner dimensioniert werden, wodurch beim Desorbieren bzw. Herauslösen der Verunreinigung geringere Volumina an bereits mit Sauerstoff angereichertem Gas abgezogen werden. Es wird dabei so vorgegangen, daß die über die rückführbare Sauerstoffmenge hinausgehende Zusatzmenge bei kleineren Verbrauchsmengen aus Flaschen oder Flüssigtanks entnommen wird und bei größeren Bedarfsmengen aber in einer gesonderten Druckwechsel-Adsorptionsanlage zur Sauerstofferzeugung aus Luft erzeugt wird und dem rückgeführten Sauerstoff vor dem Ozonerzeuger zugemischt wird. Sofern der Ozonverbraucher nur geringe Mengen an Sauerstoff verbraucht, wird die Zusatzmenge in einfacher Weise einer Sauerstofflasche oder einem Flüssigtank entnommen. Im Falle eines entsprechend höheren Zusatzsauerstoffbedarfes wird für die Herstellung der Zusatzsauerstoffmenge auch eine weitere gesonderte Druckwechsel-Adsorptionsanlage eingesetzt, welche immer noch wesentlich kleiner dimensioniert sein kann als eine Druckwechsel-Adsorptionsanlage, mit welcher gleichzeitig die Reinigung des im Kreislauf geführten Gases und die Herstellung der geforderten Zusatzmenge an Sauerstoff aus Luft vorgenommen würde. Die im Kreislauf geführte Sauerstoffmenge kann wahlweise unter Zwischenschaltung eines Ozonisators im Kreislauf geführt werden, wobei in die Leitung zum Ozonisator die jeweilige Zusatzmenge an Sauerstoff eingespeist wird. Für die Verwendung von im Kreislauf geführtem Sauerstoff in einem Ozonisator sind in der Folge Sicherheitsmaßnahmen zu beachten, auf welche später noch eingegangen wird. Eine Erhöhung der Wirtschaftlichkeit durch Verringerung der Desorptionsverluste wird dadurch erzielt, daß die aus der Druckwechsel-Adsorptionsanlage bei der Regeneration desorbierte Gasmenge zumindest teilweise in den aus dem Verbraucher abgezogenen Gasstrom eingespeist und über die Druckwechsel-Adsorptionsanlage im Kreislauf geführt wird. Die im Kreislauf geführte Menge des Gasstromes wird mit Verunreinigungen angereichert und wird nach Erreichen eines vorgegebenen Anteiles der Verunreinigungen im Gasstrom anschließend an eine Desorption ausgeschleust. Beim Einsatz der im Kreislauf geführten Gasmenge über einen Ozonverbraucher muß naturgemäß ein Ozonisator zur neuerlichen Ozonherstellung eingesetzt werden, wobei so vorgegangen wird, daß die einem Ozonisator zugeführte, aus der Druckwechsel-Adsorptionsanlage abgezogene Sauerstoffmenge über eine Oxidationsstufe zur Zerstörung niedriger Kohlenwasserstoffe dem Ozonisator zugeführt wird, wobei eine Teilmenge des im Ozonisator erzeugten Ozons der Oxidationsstufe rückgeführt wird. In einer derartigen Oxidationsstufe können insbesondere leicht flüchtige, niedrige Kohlenwasserstoffe sicher zu CO₂ und H₂O oxidiert werden. Dieser Verfahrensschritt ist deshalb von Wichtigkeit, da der zuvor beschriebene Vorgang bei Entfall der Oxidationsstufe im Ozongenerator selbst stattfinden würde. Das dabei entstehende Wasser würde anstelle von einer gewollten stillen elektrischen Entladung im Ozongenerator eine Funkenentladung auslösen, wodurch der Wirkungsgrad erheblich reduziert würde. Organische Verunreinigungen und auch der Großteil niedriger Kohlenwasserstoffe werden selbstverständlich auch bereits in der Druckwechsel-Adsorptionsanlage zu einem großen Teil zurückgehalten. Selbst bei günstigen Bedingungen verlassen aber Restmengen von über 10 ppm leichte Kohlenwasserstoffe die Druckwechsel-Adsorptionsanlage gemeinsam mit dem gereinigten Gas und derartige geringe Mengen an niedrigen Kohlenwasserstoffen führen bereits zu einer empfindlichen Beeinträchtigung des sicheren Betriebes des Ozonisators. Die in der nachfolgenden Oxidationsstufe noch zu zerstörenden organischen Verbindungen, insbesondere Methan, werden aber zuverlässig durch Einspeisen von Ozon in den Reingasstrom im Anschluß an die Druckwechsel-Adsorptionsanlage auf kurzem Wege zerstört, und da bei der Zerstörung derartiger niedriger Kohlenwasserstoffe mit Ozon eines der Reaktionsprodukte Wasser ist, wird mit Vorteil so vorgegangen, das aus der Druckwechsel-Adsorptionsanlage abgezogene, gereinigte Gas nach der Oxidationsstufe einer Trocknung unterworfen wird. Auf diese Weise werden Störungen des Ozonisators durch Wasserdampf mit Sicherheit vermieden.

Ein Großteil organischer Verunreinigungen kann aber bereits vor dem Einleiten des aus dem Verbraucher abgezogenen Gases aus dem Gasstrom abgetrennt werden, um auf diese Weise die Beladezeiten und damit die Zykluszeiten einer Druckwechsel-Adsorptionsanlage kleiner Bauart zu erhöhen. Mit Vorteil wird erfindungsgemäß hiebei so vorgegangen, daß das aus dem Verbraucher abgezogene Gas über einen Wäscher und gewünschtenfalls einen Säureabscheider der zugeführt wird, wodurch ein Großteil der mit dem aus dem Verbraucher abgezogenen organischen Verunreinigungen, insbesondere längerkettige Verunreinigungen und organische Säuren, bereits vor dem Eintritt in die Druckwechsel-Adsorptionsanlage entfernt werden kann.

Um sicherzustellen, daß bei der Ausschleusung des zur Anreicherung von Verunreinigungen bei der Desorption über die Druckwechsel-Adsorptionsanlage im Kreislauf geführten Gasstromes keine nennenswerten Mengen an Ozon in die Atmosphäre abgegeben werden, wird mit Vorteil so vorgegangen, daß das über die Druckwechsel-Adsorptionsanlage im Kreislauf geführte, desorbierte Gas bei Erreichen einer vorgegebenen Konzentration an Verunreinigungen über ein Ozonfilter, wie z.B. ein Kohlefilter, ausgeschleust wird. Ozonfilter können in einfacher Weise als Kohlefilter ausgebildet sein, wobei bei entsprechend hohen Anteilen an organischen Substanzen in dem aus einem Ozonverbraucher abgezogenen Gas, dann, wenn mit dem abgezogenen Gas nennenswerte Mengen Ozon abgezogen werden, ein Ozonvernichter oder ein analoges Ozonfilter bereits unmittelbar im Anschluß an den Ozonverbraucher vorgesehen sein kann, um in nachfolgenden Anlageteilen die Gefahr einer Explosion bzw. ein Freisetzen an die Umgebung zu eliminieren.

Nach der Desorption einer Druckwechsel-Adsorptionsanlage, bei welcher die zurückgehaltenen Verunreinigungen wiederum freigesetzt werden, muß die Druckwechsel-Adsorptionsanlage wiederum auf den für die Adsorption geeigneten Betriebsdruck gebracht werden, wobei hier mit Vorteil so vorgegangen wird, daß die Druckwechsel-Adsorptionsanlage zur Reinigung des rezirkulierten Gases nach dem Desorbieren mit gereinigtem oder zusätzlichem Sauerstoff auf Betriebsdruck gebracht wird. Eine wirtschaftliche Betriebsweise läßt sich jedoch dann erzielen, wenn der neuerliche Druckaufbau mit gereinigtem Produktgas eines zyklisch mit einem Adsorber in Verbindung setzbaren weiteren Adsorbers der gleichen Druckwechsel-Adsorptionsanlage in Verbindung gesetzt wird. In gleicher Sequenz werden auch die der Oxidationsstufe nachgeschalteten Trocknungsstufen desorbiert, wobei zur Regeneration der Trocknungsstufe bevorzugt so vorgegangen wird, daß die Trocknungsstufe gemeinsam mit den Adsorptionsbehältern der Druckwechsel-Adsorptionsanlage durch Evakuieren und gegebenenfalls Spülen am Ende der Desorptionsstufe mittels einer gemeinsamen Vakuumpumpe regeneriert werden.

Der spezifische Energieeinsatz bei Ozongeneratoren ist umso höher, je höher die Ozonausbeute gewählt wird. Durch das vorgeschlagene Verfahren, das die Rückführung von nicht verbrauchtem Sauerstoff bei minimalen Sauerstoffverlusten ermöglicht, ist es wirtschaftlich sinnvoll, den Ozonerzeuger mit hohem Sauerstoff-Durchsatz und relativ geringer Umsetzungsrate zu Ozon und daher mit geringstmöglichem Gesamtenergieeinsatz zu betreiben. Dabei wird bevorzugt so vorgegangen, daß der Ozonerzeuger mit hohem Sauerstoff-Durchsatz und deutlich geringerer als der maximalen Umsetzungsrate von Sauerstoff zu Ozon betrieben wird.

Als Ozonverbraucher kann beispielsweise eine Wasseraufbereitung, eine Zellstoffbleiche, eine Sondermüllaufbereitung und im besonderen eine Aufbereitung von Sondermüll der chemischen Industrie in Betracht kommen. Für die Herstellung von Ozon darf, wie oben erwähnt, nur trockener Sauerstoff zum Einsatz gelangen und es müssen niedrige Kohlenwasserstoffe weitestgehend quantitativ abgetrennt werden. Im Falle des Einsatzes in Zellstoffbleichanlagen besteht ein wesentlicher Teil der organischen Zersetzungsprodukte aus Huminsäuren aus der Ligninspaltung, wobei derartige Huminsäuren zu einem großen Teil in einem Wäscher entfernt werden können. Mit einem derartigen Wäscher wird gleichzeitig die Temperatur des im Kreislauf geführten Gases herabgesetzt, was sich für eine nachfolgende Druckwechsel-Adsorptionsanlage vorteilhaft auswirkt. Dem Wäscher kann ein weiterer Säureabscheider nachgeschaltet werden, wobei mit Vorteil ein derartiger Wäscher vor dem nachgeschalteten Säureabscheider angeordnet ist, da sich auch hier die im Wäscher erzielte Temperaturerniedrigung vorteilhaft auswirkt und bereits weitgehend die Säureanteile ausgewaschen wurden.

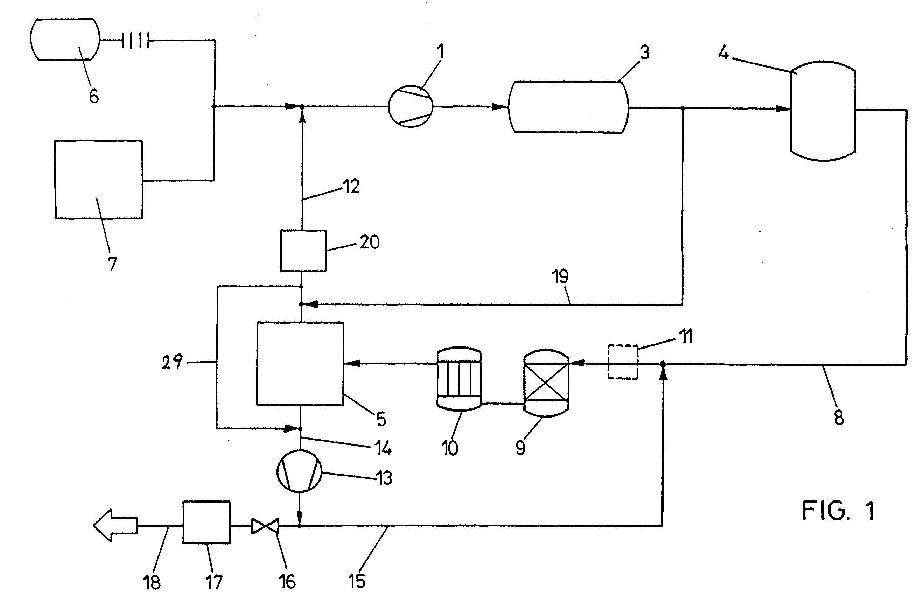

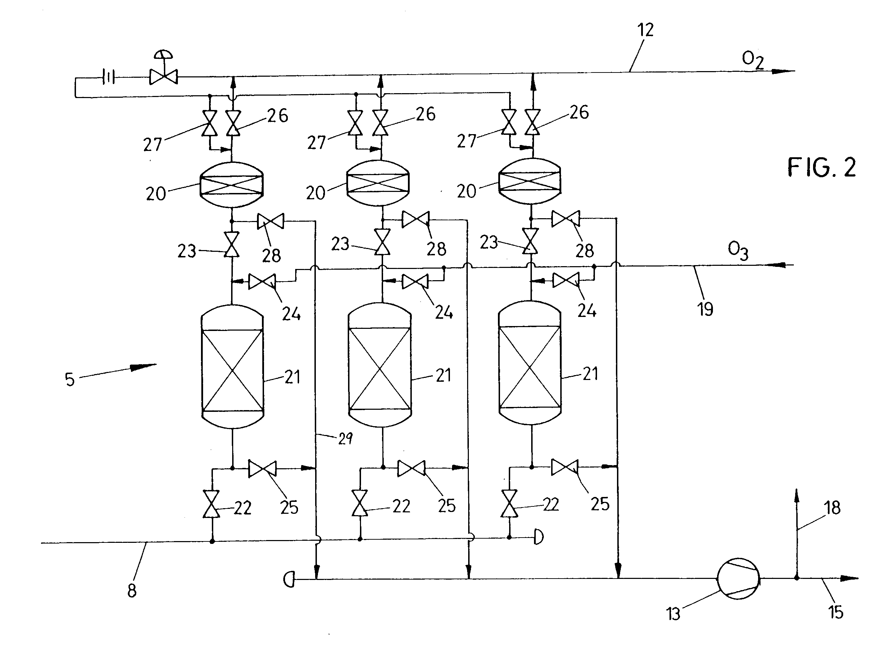

Die Erfindung wird nachfolgend an Hand von in der Zeichnung schematisch dargestellten Ausführungsbeispielen näher erläutert. In dieser zeigen Fig.1 eine schematische Darstellung einer Einrichtung zur Durchführung des erfindungsgemäßen Verfahrens und Fig.2 eine schematische Darstellung der Druckwechsel-Adsorptionsanlage zur Reinigung des aus dem Ozonverbrauer abgezogenen Gasstromes.

In Fig.1 ist mit 1 ein Sauerstoffgebläse bezeichnet, welches hochreinen Sauerstoff über einen Ozonisator 3 einem Ozonverbraucher 4 zur Verfügung stellt. Der hochreine Sauerstoff stammt dabei zum Großteil aus einer Druckwechsel-Adsorptionsanlage 5, welcher der aus dem Verbraucher 4 abgezogene Gasstrom zugeführt wird, wie dies weiter unten noch näher beschrieben wird, und zu einem geringeren Teil zum Ersatz des in dem Verbraucher verbrauchten Sauerstoffes aus einer zusätzlichen Sauerstoffquelle, welche insbesondere für geringe Zusatzmengen bzw. Ersatzmengen an Sauerstoff von einer Sauerstofflasche 6 und bei größeren Ersatzmengen beispielsweise von einer weiteren Druckwechsel-Adsorptionsanlage 7 zur Zerlegung von Luft stammen kann.

Der aus dem Verbraucher 4 über die Leitung 8 abgezogene Gasstrom wird für eine erste Vorreinigung bzw. Abkühlung zur Verbesserung des Wirkungsgrades der Druckwechsel-Adsorptionsanlage 5 entsprechend dem Einsatzzweck des Ozons in dem Verbraucher vorbehandelt, wobei beispielsweise für aus einer Zellstoffbleiche stammendes verunreinigtes Gas ein Säureabscheider 9 und nachgeschaltet ein Wärmetauscher 10 vorgesehen sein kann. Es kann jedoch auch vor dem Säureabscheider 9 bereits ein Wäscher 11 vorgesehen sein, welcher teilweise eine Reinigung des Gasstromes und gleichzeitig eine Temperaturerniedrigung mit sich bringt, wodurch ein nachgeschalteter Säureabscheider 9 wirtschaftlicher betrieben werden kann.

Aus der Druckwechsel-Adsorptionsanlage 5 zur Reinigung des im Verbraucher 4 eingesetzten sauerstoffreichen Gases wird einerseits hochreiner Sauerstoff über die Leitung 12 dem Sauerstoffgebläse 1 rückgeführt und über eine Vakuumpumpe 13 beim Desorbieren aus der Druckwechsel-Adsorptionsanlage 5 vor allem die Verunreinigungen mit einem Restgehalt Sauerstoff über die Leitung 14 abgezogen. Gleichzeitig dazu wird über die Leitung 29 die der Oxidationsstufe nachgeschaltete Trocknungsstufe desorbiert. Um aus dem über die Leitung 14 abgezogenen Desorptionsstrom einen Großteil des sich darin befindlichen Sauerstoffes rückgewinnen zu können, d.h. um eine entsprechend hohe Anreicherung der Verunreinigungen im Desorptionsstrom zu erzielen, wird ein Großteil des durch die Vakuumpumpe abgezogenen Desorptionsstromes über eine Leitung 15 dem über die Leitung 8 aus dem Verbraucher 4 abgezogenen Gasstrom rückgeführt und gelangt wiederum in die Druckwechsel-Adsorptionsanlage 5. Durch entsprechende Steuerung eines Ventiles 16 wird bei ausreichender Anreicherung der Verunreinigungen im Desorptionsstrom ein entsprechender Anteil über ein Filter 17, welches bei einem Ozonverbraucher 4 beispielsweise als Kohlefilter zur Einstellung einer Sicherheitsbestimmungen entsprechenden Ozonkonzentration ausgebildet ist, über eine Leitung 18 abgezogen.

Bei Einsatz der in Fig.1 gezeigten Einrichtung in einer ozonverbrauchenden Anlage muß trockener und vor allem von niedrigen Kohlenwasserstoffen, insbesondere Methan, gereinigter Sauerstoff dem Ozonisator 3 zugeführt werden, um einen sicheren und wirtschaftlichen Betrieb des Ozonisators 3 sicherzustellen. Der Großteil der Verunreinigungen wurde zwar aus dem aus dem Verbraucher abgezogenen Gasstrom in den der Druckwechsel-Adsorptionsanlage 5 vorgeschalteten Einrichtungen oder der Druckwechsel-Adsorptionsanlage 5 selbst beseitigt, wobei im allgemeinen die Werte für niedrige Kohlenwasserstoffe, insbesondere Methan, welche im gereinigten Gasstrom aus der Druckwechsel-Adsorptionsanlage 5 abgezogen werden, einen Wert von 10 ppm überschreiten, welcher für einen sicheren und wirtschaftlichen Betrieb des Ozonisators 3 im allgemeinen zu hoch ist. Zur weiteren Absenkung des Gehaltes an niedrigen Kohlenwasserstoffen ist daher vorgesehen, über eine Zweigleitung 19 im Ozonisator 3 erzeugtes Ozon einer der Druckwechsel-Adsorptionsanlage 5 nachgeschalteten Oxidationsstufe zuzuführen, wobei im allgemeinen durch die Zugabe von Ozon an dieser Stelle eine sofortige Vernichtung niedriger Kohlenwasserstoffe, insbesondere von Methan, vorgenommen wird. Zur anschließenden Trocknung des derart behandelten, aus der Druckwechsel-Adsorptionsanlage 5 abgezogenen Reingases ist eine Trocknungsstufe 20 vorgesehen, in welcher das bei der Zerstörung der niedrigen Kohlenwasserstoffe unter anderem entstehende Wasser aus dem Sauerstoffstrom entfernt wird. Die Vorgangsweise zur Entfernung niedriger Kohlenwasserstoffe aus dem aus der Druckwechsel-Adsorptionsanlage 5 abgezogenen gereinigten Produktgas ist dabei in Fig.2 näher erläutert.

Durch die Verwendung einer Druckwechsel-Adsorptionsanlage 5 lediglich zur Reinigung des aus dem Verbraucher 4 abgezogenen, verunreinigten Gases kann diese Druckwechsel-Adsorptionsanlage mit geringer Größe ausgebildet werden, und es kann gezielt über die teilweise Rückführung des desorbierten Stromes eine Anreicherung der Verunreinigungen im über die Leitung 18 abgezogenen desorbierten Gasstrom und damit eine Herabsetzung des gleichzeitig damit ausgetragenen Sauerstoffstromes erzielt werden. Weiters läßt sich eine derartige Druckwechsel-Adsorptionsanlage 5 mit einem hohen Wirkungsgrad im Bereich von über 80 % betreiben, da das zugeführte, aus dem Verbraucher stammende Gas trotz der darin enthaltenen Verunreinigungen einen gegenüber Luft stark erhöhten Sauerstoffanteil aufweist. Es muß daher über die zusätzlichen Sauerstoffquellen 6 bzw. 7 nur eine geringe Sauerstoffmenge bereitgestellt werden, wobei bei Verwendung einer weiteren Druckwechsel-Adsorptionsanlage 7 zur Bereitstellung der Zusatzmenge an Sauerstoff diese ebenfalls klein dimensioniert werden kann, da sie lediglich für die Bereitstellung der Zusatzmenge an Sauerstoff und nicht für die gesamte, dem Ozonisator 3 und dem Ozonverbraucher 4 zur Verfügung gestellte hochreine Sauerstoffmenge konzipiert werden muß.

Die in Fig.2 dargestellte Druckwechsel-Adsorptionsanlage 5 ist für einen zyklischen Betrieb ausgelegt und weist drei Druckwechseladsorber 21 auf, welche jeweils gereinigtes Produktgas in die Leitung 12 abgeben. Den Druckwechseladsorbern 21 wird über die Leitung 8 aus dem Verbraucher 4 stammendes Gas, welches bereits entsprechend vorgereinigt und/oder abgekühlt ist, über Ventile 22 zugeführt, wobei gereinigtes und einen hohen Prozentsatz an Sauerstoff enthaltendes Produktgas über Ventile 23 aus den Druckwechseladsorbern den Trocknern 20, welche ein Gel zur Beseitigung des Wassers enthalten, zugeführt wird. Die gezeigte Anlage ist dabei für einen ozonverbrauchenden Prozeß ausgebildet, in welchem nach den einzelnen Druckwechseladsorbern 21 eine Zufuhr von Ozon über Ventile 24 zur Beseitigung niedriger Kohlenwasserstoffe, insbesondere Methan, zugeführt wird. Aus den Druckwechseladsorbern wird zur Desorption des mit Verunreinigungen stark angereichterten Gases über die Vakuumpumpe 13 Gas über Ventile 25 abgezogen, wobei der Betrieb der drei Druckwechseladsorber zyklisch erfolgt, so daß in jeweils gleichen Zeiträumen ein Adsorber beladen wird, aus einem Adsorber Verunreinigungen desorbiert werden und der dritte Adsorber durch gereinigten oder zusätzlichen Sauerstoff wiederum auf Betriebsdruck gebracht wird. Um die Adsorber wiederum auf Betriebsdruck zu bringen, werden dabei die der Leitung 12 unmittelbar vorgeschalteten Ventile 26 jeweils geschlossen, und es erfolgt ein Zuführen von Sauerstoff aus der Leitung 12 in die Trockner 20 und die Druckwechseladsorber 21 über Ventile 27 bei geöffnetem Ventil 23. In dieser Phase kann über die Ventile 27 auch eine Spülung mit gereinigtem bzw. ergänztem Sauerstoff durchgeführt werden. Für eine Reinigung der Trockner 20 kann über Ventile 28 in der Leitung 29 ein Evakuieren der Trockner durch die Vakuumpumpe erfolgen.

## Patentansprüche

1. Verfahren zur Herstellung von Ozon für einen Ozonverbraucher, aus welchem Restsauerstoff abgezogen und in einer Druckwechsel-Adsorptionsanlage (5) gereinigt wird und zumindest teilweise unter Zwischenschaltung eines Ozonisators (3) dem Ozonverbraucher (4) rückgeführt wird, wobei die über die rückführbare Sauerstoffmenge hinausgehende Zusatzmenge für den Bedarf des Verbrauchers (4) einer von der Druckwechsel-Adsorptionsanlage (5) zum Reinigen des rezirkulierten Sauerstoffes gesonderten Sauerstoffquelle (6,7) entnommen wird, und die über die rückführbare Sauerstoffmenge (12) hinausgehende Zusatzmenge bei kleineren Verbrauchsmengen aus Flaschen oder Flüssigtanks (6) entnommen wird und bei größeren Bedarfsmengen aber in einer gesonderten Druckwechsel-Adsorptionsanlage (7) zur Sauerstofferzeugung aus Luft erzeugt wird und dem rückgeführten Sauerstoff vor dem Ozonerzeuger (3) zugemischt wird, wobei die aus der Druckwechsel-Adsorptionsanlage (5) bei der Regeneration desorbierte Gasmenge zumindest teilweise in den aus dem Verbraucher (4) abgezogenen Gasstrom eingespeist und über die Druckwechsel-Adsorptionsanlage (5) im Kreislauf geführt wird und die dem Ozonisator (3) zugeführte, aus der Druckwechsel-Adsorptionsanlage (5) abgezogene Sauerstoffmenge über eine Oxidationsstufe zur Zerstörung niedriger Kohlenwasserstoffe dem Ozonisator (3) zugeführt wird, wobei eine Teilmenge (19) des im Ozonisator (3) erzeugten Ozons der Oxidationsstufe rückgeführt wird.

2. Verfahren nach Anspruch 1, dadurch gekennzeichnet, daß das aus der Druckwechsel-Adsorptionsanlage (5) abgezogene, gereinigte Gas nach der Oxidationsstufe einer Trocknung (20) unterworfen wird.

3. Verfahren nach einem der Ansprüche 1 oder 2, dadurch gekennzeichnet, daß das aus dem Verbraucher (4) abgezogene Gas über einen Wäscher (11) und gewünschtenfalls einen Säureabscheider (9) der Druckwechsel-Adsorptionsanlage (5) zugeführt wird.

4. Verfahren nach einem der Ansprüche 1, 2 oder 3, dadurch gekennzeichnet, daß das über die Druckwechsel-Adsorptionsanlage (5) im Kreislauf geführte, desorbierte Gas bei Erreichen einer vorgegebenen Konzentration an Verunreinigungen über einen Ozonfilter (17), wie z.B. ein Kohlefilter, ausgeschleust wird.

5. Verfahren nach einem der Ansprüche 1 bis 4, dadurch gekennzeichnet, daß die Druckwechsel-Adsorptionsanlage (5) zur Reinigung des rezirkulierten Gases nach dem Desorbieren mit gereinigtem oder zusätzlichem Sauerstoff auf Betriebsdruck gebracht wird.

6. Verfahren nach einem der Ansprüche 1 bis 5, dadurch gekennzeichnet, daß die Trocknungsstufe (20) gemeinsam mit den Adsorptionsbehältern (21) der Druckwechsel-Adsorptionsanlage (5) durch Evakuieren und gegebenenfalls Spülen am Ende der Desorptionsstufe mittels einer gemeinsamen Vakuumpumpe (13) regeneriert werden.

7. Verfahren nach einem der Ansprüche 1 bis 6, dadurch gekennzeichnet, daß der Ozonerzeuger (3) mit hohem Sauerstoff-Durchsatz und deutlich geringerer als der maximalen Umsetzungsrate von Sauerstoff zu Ozon betrieben wird.

## Claims

1. A process for producing ozone for an ozone consumer from which residual oxygen is drawn off and purified in a pressure swing adsorption plant (5) and at least partially is recycled to said ozone consumer (4) via an ozonizer (3), wherein the additional amount required by the consumer (4) in excess of the recyclable amount of oxygen is taken from an oxygen source (6, 7) separate from the pressure swing adsorption plant for purifying the recirculated oxygen and wherein the additional amount required in excess of the recyclable amount of oxygen (12) for smaller consumptions is taken from bottles or liquid tanks (6), yet for larger consumptions is produced in a separate pressure swing adsorption plant (7) for the production of oxygen from air and admixed to the recycled oxygen before the ozone generator (3), wherein the amount of gas desorbed from the pressure swing adsorpton plant (5) during regeneration at least partially is fed into the gas stream drawn off the consumer (4) and is recirculated via the pressure swing adsorption plant (5) and the amount of oxygen drawn off the pressure swing adsorption plant (5) and supplied to the ozonizer (3) is supplied to the ozonizer (3) via an oxidation stage for destroying low hydrocarbons, a partial amount (19) of the ozone produced in the ozonizer (3) being recycled to said oxidation stage.

2. A process according to claim 1, characterized in that the gas drawn off the pressure swing adsorption plant (5) and purified is subjected to drying (20) after the oxidation stage.

3. A process according to any one of claims 1 or 2, characterized in that the gas drawn off the consumer (4) is supplied to the pressure swing adsorption plant (5) via a scrubber (11) and, if desired, via an acid separator (9).

4. A process according to any one of claims 1, 2 or 3, characterized in that the desorbed gas recirculated via the pressure swing adsorption plant (5) is sleuced out via an ozone filter (17), such as, e.g., a charcoal filter, upon reaching of a predetermined concentration of impurities.

5. A process according to any one of claims 1 to 4, characterized in that the pressure swing adsorption plant (5) for purifying the recirculated gas after desorption is brought to operating pressure by means of purified or additional oxygen.

6. A process according to any one of claims 1 to 5, characterized in that the drying stage (20), together with the adsorption vessels (21) of the pressure swing adsorption plant (5), are regenerated by evacuation and optionally flushing at the end of the desorption stage by means of a common vacuum pump (13).

7. A process according to any one of claims 1 to 6, characterized in that the ozone generator (3) is operated at a high oxygen flow rate and at a markedly lower than maximum conversion rate of oxygen to ozone.

## Revendications

1. Procédé pour la fabrication d'ozone pour un consommateur d'ozone, duquel de l'oxygène résiduel est enlevé et nettoyé dans un appareil d'adsorption à changement de pression (5) et ramené au moins partiellement au consommateur d'ozone (4) en intercalant un ozoniseur (3), la quantité supplémentaire qui dépasse la quantité d'oxygène recyclable pour les besoins du consommateur (4) étant prélevée dans une source d'oxygène (6,7) séparée de l'appareil d'adsorption à changement de pression (5) pour le nettoyage de l'oxygène recyclé, et la quantité supplémentaire qui dépasse la quantité d'oxygène (12) recyclable étant prélevée dans des bouteilles ou des citernes à liquide (6) dans le cas de consommations assez faibles, mais étant générée à partir d'air, dans le cas de besoins supérieurs, dans un appareil d'adsorption séparé à changement de pression (7) pour la production d'oxygène et étant mélangée à l'oxygène recyclé avant le générateur d'ozone (3), la quantité de gaz désorbée à la sortie de l'appareil d'adsorption à changement de pression (5) lors de la régénération étant injectée au moins partiellement dans le flux de gaz retiré du consommateur (4) et étant amenée dans le circuit par l'appareil d'adsorption à changement de pression (5) et la quantité d'oxygène enlevée de l'appareil d'adsorption à changement de pression (5) et amenée à l'ozoniseur (3) étant amenée à l'ozoniseur (3) par un étage d'oxydation pour la destruction de faibles hydrocarbures, une quantité partielle (19) de l'ozone généré dans l'ozoniseur (3) étant ramenée à l'étage d'oxydation.

2. Procédé selon la revendication 1, caractérisé en ce que le gaz enlevé de l'appareil d'adsorption à changement de pression (5) et nettoyé est soumis à un séchage (20) après l'étape d'oxydation.

3. Procédé selon l'une quelconque des revendications 1 ou 2, caractérisé en ce que le gaz enlevé du consommateur (4) est amené par un laveur (11) et, si cela est souhaité, un séparateur d'acide (9) à l'appareil d'adsorption à changement de pression (5).

4. Procédé selon l'une quelconque des revendications 1, 2 ou 3, caractérisé en ce que le gaz guidé par l'appareil d'adsorption à changement de pression (5) dans le circuit et désorbé est éclusé au dehors par un filtre d'ozone (17), par exemple un filtre à charbon, lorsqu'on atteint une concentration prédéfinie d'impuretés.

5. Procédé selon l'une quelconque des revendications 1 à 4, caractérisé en ce que l'appareil d'adsorption à changement de pression (5) est amené à la pression de service pour le nettoyage du gaz recyclé après la désorption avec de l'oxygène nettoyé ou supplémentaire.

6. Procédé selon l'une quelconque des revendications 1 à 5, caractérisé en ce que l'étage de séchage (20) est régénéré en même temps que les récipients à adsorption (21) de l'appareil d'adsorption à changement de pression (5) par mise sous vide et éventuellement par rinçage à la fin de l'étape de désorption au moyen d'une pompe commune à vide commune (13).

7. Procédé selon l'une quelconque des revendications 1 à 6, caractérisé en ce que le générateur d'ozone (3) est exploité avec un débit d'oxygène élevé et nettement plus faible que le taux de transformation maximum d'oxygène en ozone.
